# FASCICULE DE BREVET EUROPEEN

(11) **EP 3 241 050 B1**
(45) Date de publication et mention de la délivrance du brevet: **23.03.2022**
(21) Numéro de dépôt: 15823612.5
(22) Date de dépôt: 22.12.2015
(51) Int. Cl.: G02B 21/16, G02B 21/24, G02B 21/36

(54) **DISPOSITIF POUR RÉALISER DE LA MICROSCOPIE À FEUILLE DE LUMIÈRE**
VORRICHTUNG ZUR DURCHFÜHRUNG VON LICHTSCHEIBENMIKROSKOPIE
DEVICE FOR CARRYING OUT LIGHT-SHEET MICROSCOPY

(30) Priorité: 29.12.2014 FR 1403012
(43) Date de publication de la demande: 08.11.2017
(73) Titulaire: GATACA SYSTEMS, 91300 Massy (FR)
(72) Inventeur: BALAA, Karla, 75015 Paris (FR)
(74) Mandataire: IPAZ
(86) Numéro de dépôt international: PCT/FR2015/000236
(87) Numéro de publication internationale: WO 2016/107992

(56) Documents cités:
- WO-A1-2007/065711
- WO-A1-2013/053454
- WO-A2-2011/059826
- DE-A1-102012 016 347
- US-A1- 2014 099 659

## Description

### Domaine technique

La présente invention concerne un dispositif pour réaliser de la microscopie à feuille de lumière. Elle concerne aussi un microscope équipé d'un tel dispositif.

Un tel dispositif permet par exemple à un utilisateur de réaliser de la microscopie à feuille de lumière sur un microscope inversé.

### Etat de la technique antérieure

La microscopie à feuille de lumière (aussi appelée SPIM pour «Selective Plane Illumination Microscopy» en anglais) est une technique de référence dans le domaine de la biologie du développement pour l'imagerie du vivant depuis l'échelle cellulaire jusqu'à l'observation d'embryons entiers. Dans cette technique, l'échantillon est excité au moyen d'une feuille de lumière et la fluorescence émise est collectée perpendiculairement au plan de la feuille de lumière. De cette manière, il est possible de faire des observations en 3D avec un faible taux de photo blanchiment car la feuille de lumière excite uniquement la zone observée.

Une revue de l'état de l'art est disponible dans l'article suivant : "Selective plane illumination microscopy techniques in developmental biology" Huisken, J. et Stainer, D. (2009).

Puisque que la plupart des échantillons ont besoin d'être dans un milieu bio-compatible ou contenu à l'intérieur d'un gel bio-compatible pour rester vivant durant leur observation, les systèmes de SPIM sont généralement conçus autour d'une chambre d'immersion dans laquelle l'échantillon est plongé.

Pour ne pas avoir besoin d'utiliser un microscope dédié à la technique SPIM, plusieurs solutions ont été développées. La technique OCPI décrite dans les brevets US 20090174937 A1 et US 20140126046 A1 utilise un microscope inversé. Dans cette technique, un dispositif SPIM est attaché au bâti du microscope inversé, au-dessus de la platine de translation XY. Les trajets optiques d'excitation et de réception de fluorescence sont inclinés par rapport à la verticale et l'échantillon est fixé à la platine XY. Cependant, ce type de solution a pour désavantage :
- d'être encombrante, et
- de rendre complexes les déplacements XY de l'échantillon en SPIM car le plan de la caméra n'est pas parallèle aux axes XY.

On connaît aussi des solutions telle que celle décrite dans le document US 2006 / 0033987, qui a elle aussi pour désavantage d'être encombrante.

Plusieurs solutions qui s'adaptent plus facilement à un microscope conventionnel et dans lesquelles un faisceau de lumière est réfléchi dans le plan focal de l'objectif à proximité de l'échantillon ont également été développés pour le SPIM, tel que décrit par exemple dans le document US 20130107358 A1 ou US 2006/0012866. Néanmoins, on observe plusieurs inconvénients majeurs :
- la proximité du réflecteur avec l'échantillon limite les capacités de déplacement et rend ces techniques difficilement utilisables avec une chambre d'immersion et des échantillons de grandes tailles,
- la taille du réflecteur limite également l'ouverture numérique maximale du faisceau d'excitation et donc la finesse maximale de la feuille de lumière,
- enfin, dans ces techniques, l'objectif d'imagerie ne peut pas se déplacer sans modifier l'alignement de la feuille de lumière avec le plan focal de l'objectif ; il faut alors déplacer l'échantillon à la place ou réaligner la feuille à chaque position.

Le but de la présente invention est de proposer un dispositif qui (typiquement en étant ajouté à un microscope inversé) permette de faire de l'imagerie SPIM :
- en diminuant son encombrement, et/ou
- en rendant moins complexes les déplacements de l'échantillon, et/ou
- en augmentant les possibilités de déplacement ou de taille de l'échantillon, et/ou
- en ne limitant pas l'ouverture numérique d'illumination ou d'excitation, et/ou
- en évitant de modifier l'alignement de la feuille de lumière avec le plan d'observation de l'objectif lors de son utilisation, par rapport à l'état de l'art antérieur.

### Exposé de l'invention

Cet objectif est atteint avec un dispositif selon la revendication 1

La chambre d'immersion comprend typiquement une ouverture et un fond.

L'extrémité distale de l'objectif est de préférence située du côté du fond de la chambre d'immersion. L'ouverture de la chambre d'immersion, le plan de feuille et l'extrémité distale de l'objectif sont de préférence alignés dans cet ordre.

Les moyens de mise en forme font de préférence partie des moyens de guidage et sont de préférence situés le long du chemin optique de guidage entre les moyens d'injection et la chambre d'immersion.

Les moyens de mise en forme sont de préférence situés entre :
- un premier plan perpendiculaire à l'axe optique de l'objectif et passant par l'ouverture de la chambre d'immersion et
- un deuxième plan perpendiculaire à l'axe optique de l'objectif et situé au-delà de l'extrémité distale de l'objectif par rapport au premier plan.

Les moyens de mise en forme peuvent comprendre des moyens de transformation, agencés pour transformer le faisceau de lumière de sorte :
- qu'avant transformation par les moyens de transformation, le faisceau de lumière n'a pas de direction d'élongation privilégiée dans un plan perpendiculaire à sa direction de propagation, et
- qu'après transformation par les moyens de transformation, le faisceau de lumière a une direction d'élongation privilégiée dans un plan perpendiculaire à sa direction de propagation,
les moyens de transformation étant situés sur une partie du chemin optique le long de laquelle le faisceau de lumière se déplace parallèlement à l'axe optique de l'objectif.

Le chemin optique de guidage peut comprendre au moins :
- une première partie de chemin optique agencée pour que le faisceau de lumière se propage selon une première direction de propagation, puis
- une deuxième partie de chemin optique agencée pour que le faisceau de lumière se propage selon une deuxième direction de propagation opposée à la première direction,
la première direction étant parallèle à l'axe optique de l'objectif.

Les moyens de mise en forme peuvent comprendre une lentille cylindrique et/ou un miroir oscillant.

Les moyens de mise en forme sont de préférence situés en dehors de l'objectif.

De préférence, le chemin optique de guidage ne passe pas par l'objectif.

Les moyens d'injection sont de préférence agencés pour injecter le faisceau de lumière dans le dispositif de sorte que lors de son injection le faisceau de lumière se déplace parallèlement à l'axe optique de l'objectif.

Les moyens de guidage sont de préférence agencés pour que l'intégralité du chemin optique de guidage entre les moyens d'injection et la chambre d'immersion soit située entre le premier plan et le deuxième plan.

Le fond de la chambre d'immersion peut comprendre l'extrémité distale de l'objectif de sorte qu'il n'existe pas d'intermédiaire entre l'intérieur de la chambre d'immersion et l'extrémité distale de l'objectif.

L'objectif est de préférence un objectif à immersion.

Les moyens de guidage sont de préférence agencés pour que le faisceau de lumière entre dans la chambre d'immersion par une face de la chambre d'immersion différente du fond de la chambre d'immersion.

Les moyens de guidage peuvent être agencés pour que la direction de propagation du faisceau de lumière lors de son entrée dans la chambre d'immersion soit perpendiculaire à l'axe optique de l'objectif.

Les moyens d'injection, l'objectif, la chambre d'immersion, les moyens de guidage et les moyens de mise en forme peuvent être solidaires et agencés pour qu'un déplacement de l'objectif :
- ne modifie ni un angle d'incidence ni une position ni une taille du faisceau de lumière sur les moyens de mise en forme,
- ne modifie pas les positions relatives du plan d'observation de l'objectif et du plan de feuille.

Le plan d'observation de l'objectif peut se situer dans le plan de feuille dans la chambre d'immersion.

Suivant encore un autre aspect de l'invention, il est proposé un microscope équipé d'un dispositif selon l'invention, caractérisé en ce que le microscope est un microscope inversé comprenant un porte objectif et en ce que l'objectif du dispositif selon l'invention est monté sur le porte objectif du microscope inversé.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- la figure 1 représente un microscope inversé standard 100 selon l'état de la technique antérieure et ses éléments associés,
- la figure 2 est une vue schématique de profil d'un premier mode de réalisation de microscope 1000 selon l'invention comprenant un dispositif 200 selon l'invention,
- la figure 3 est une vue schématique de profil d'une partie du microscope 1000 de la figure 2,
- la figure 4 est une vue en perspective de différents éléments optiques du dispositif 200 selon l'invention du microscope 1000 de la figure 2,
- la figure 5 est une vue en perspective de différents éléments optiques et de pièces mécaniques du dispositif 200 selon l'invention du microscope 1000 de la figure 2,
- la figure 6 est une vue schématique de profil d'une partie du microscope 1000 de la figure 2, cette vue étant plus détaillée que la figure 3,
- la figure 7 est une vue schématique de profil d'une partie d'un deuxième mode de réalisation de microscope selon l'invention comprenant un deuxième mode de réalisation de dispositif 200 selon l'invention, et
- la figure 8 est une vue schématique de profil d'une partie d'un troisième mode de réalisation de microscope selon l'invention comprenant un troisième mode de réalisation de dispositif 200 selon l'invention.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

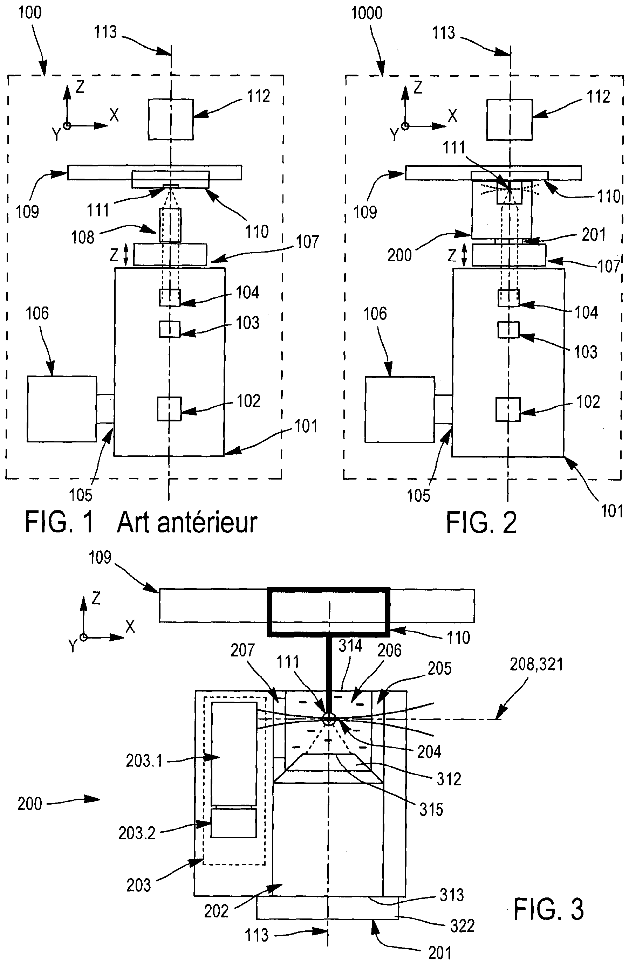

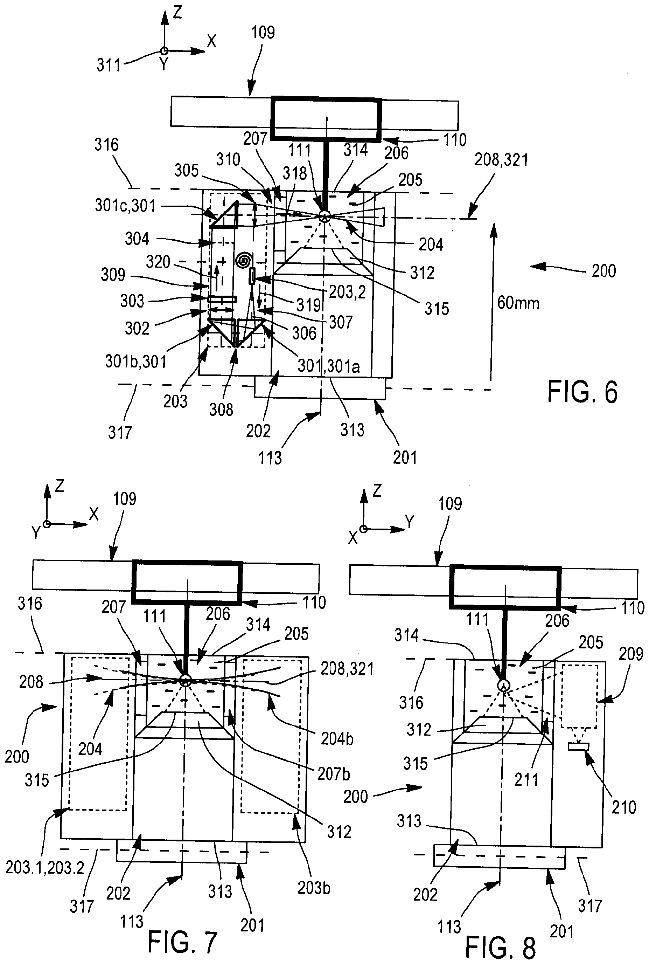

Dans la description suivante, il sera fait référence à un système de coordonnées orthogonal dans lequel :
- l'axe X est orienté horizontalement dans le plan des figures 1 à 3 et 6 à 7 et horizontalement perpendiculairement au plan de la figure 8,
- l'axe Y est orienté horizontalement perpendiculairement au plan des figures 1 à 3 et 6 à 7 et horizontalement dans le plan de la figure 8, et
- l'axe Z est orienté verticalement dans le plan des figures 1 à 3 et 6 à 8.

La figure 1 représente un microscope inversé standard 100 selon l'état de la technique antérieure et ses éléments associés. Le bâti 101 du microscope possède un porte objectif 107 généralement sous la forme d'une tourelle multi-objectifs. L'échantillon 111 maintenu par un porte échantillon 110 est observé à travers l'objectif 108 du microscope et le chemin de détection qui contient un ou plusieurs cube(s) filtre(s) 104 utilisés pour l'épi-illumination de l'échantillon, une lentille de tube 103 et un réflecteur 102 qui renvoie l'image de l'échantillon sur un port de détection du microscope. Une caméra 106 est située à la fin du chemin de détection grâce à une pièce de connexion 105, qui est habituellement une monture C. Une source lumineuse 112 centrée sur l'axe 113 de l'objectif du microscope est utilisée pour faire de la microscopie en transmission.

Le positionnement de l'échantillon 111 par rapport à l'objectif est assuré par une platine 109 qui se déplace en X et en Y. Le déplacement en Z se fait en déplaçant le porte objectif 107 verticalement. Un deuxième déplacement en Z est possible si la platine est équipée d'une motorisation en Z. Cette motorisation en Z est en général un moteur piézo-électrique utilisé pour réaliser un sectionnement rapide sur un débattement restreint.

On va maintenant décrire, en référence aux figures 2 à 6, un premier mode de réalisation de dispositif 200 selon l'invention intégré dans le microscope de la figure 1 de manière à former un microscope 1000 selon l'invention. Ce microscope 1000 selon l'invention ne sera décrit que pour ses différences par rapport au microscope 100 de la figure 1.

Le microscope 1000 est identique au microscope 100, sauf en ce que l'objectif 108 est remplacé par le dispositif 200 et en ce que le porte échantillon 110 est modifié.

Le dispositif 200 comprend :
- des moyens d'injection 203.2, agencés pour injecter un faisceau de lumière 306 dans le dispositif 200,
- une chambre d'immersion 205,
- des moyens de guidage 203.1 (aussi référencés 301 à 305) agencés pour guider le faisceau de lumière 306 à partir des moyens d'injection 203.2 et jusque dans la chambre d'immersion 205 le long d'un chemin optique de guidage 307-310 (qui ne passe pas par l'objectif 202), et
- des moyens de mise en forme 302, 303 , 305, agencés pour mettre en forme le faisceau de lumière 306 (ayant initialement au niveau des moyens d'injection 203.2 une symétrie centrale dans un plan perpendiculaire à la direction de propagation du faisceau 306) provenant des moyens d'injection 203.2 de manière à lui donner (continûment ou en moyenne dans le temps), dans un plan perpendiculaire à la direction de propagation du faisceau 306, une forme allongée selon une dimension spatiale 311 de manière à créer une feuille de lumière 204 dans un plan de feuille 321 situé dans la chambre d'immersion205, et
- un objectif 202, dont un plan d'observation 208 (consistant de préférence en un plan focal de l'objectif 202 à une longueur d'onde d'intérêt qui peut être identique ou différente d'une longueur d'onde du faisceau 306) est situé dans la chambre d'immersion 205 et est perpendiculaire à un axe optique 113 (de préférence vertical) de l'objectif 202, ledit objectif 202 comprenant une extrémité distale 312 orientée vers l'intérieur de la chambre d'immersion 205 et une extrémité proximale 313, ces deux extrémités 312 et 313 étant alignées le long de l'axe optique 113.

Le plan de feuille 321 est perpendiculaire (ou sensiblement perpendiculaire à plus ou moins dix degrés) à l'axe 113.

La chambre à immersion 205 est fixée à l'objectif 202 de façon étanche pour permettre de la remplir avec le milieu d'immersion 206 de l'objectif 202.

L'extrémité proximale 313 est agencée pour qu'un point de lumière :
- à la longueur d'onde d'intérêt, et
- issu du plan focal 208 pour cette longueur d'onde d'intérêt, et
- imagé par l'objectif 202
soit collimaté au niveau de l'extrémité proximale 313.

La chambre d'immersion 205 comprend une ouverture 314 située vers le haut et un fond 315 situé vers le bas.

L'ouverture 314 est définie, en prenant l'axe 113 vertical, comme l'ouverture totale, dans un plan horizontal, permettant d'entrer et de sortir de la chambre 205, ce plan horizontal passant par le niveau maximum de liquide pouvant être atteint à l'intérieur de la chambre 205 (en supposant que ce niveau maximum est plan, c'est-à-dire en négligeant les effets de tension de surface ou de mouillage par le liquide sur les parois intérieures de la chambre 205).

L'ouverture 314 est donc un trou agencé pour permettre un passage d'un échantillon 111 à partir de l'extérieur de la chambre et jusqu'à l'intérieur de la chambre 205, et/ou à partir de l'intérieur de la chambre 205 et jusqu'à l'extérieur de la chambre, et cela même lorsque la chambre 205 est remplie du milieu d'immersion 206 et en état d'utilisation avec la feuille de lumière 204 à l'intérieur, sans perdre ou renverser du milieu d'immersion 206 hors de la chambre 205. L'ouverture 314 n'est donc pas une fenêtre, une fenêtre étant une fermeture fermée par une vitre ou une lame a priori nécessaire à la conservation du milieu d'immersion lors de la création de la feuille de lumière.

L'extrémité distale 312 de l'objectif 202 est située du côté du fond 315 de la chambre d'immersion 205 de sorte que l'ouverture 314 de la chambre d'immersion 205, le plan de feuille 321 et l'extrémité distale 312 de l'objectif 202 soient alignés perpendiculairement au plan de feuille 321 et/ou le long de l'axe 113 (verticalement, de haut en bas) dans cet ordre.

Les moyens de mise en forme 302, 303, 305 comprennent typiquement :
- des moyens de transformation 303, agencés pour transformer le faisceau 306 de sorte :
   ° qu'avant transformation par les moyens 303, le faisceau 306 n'a pas de direction d'élongation privilégiée (pour sa forme et/ou sa répartition d'intensité lumineuse) dans un plan perpendiculaire à sa direction de propagation (i.e. il a une forme de symétrie centrale dans ce plan perpendiculaire à sa direction de propagation), et
   ° qu'après transformation par les moyens 303, le faisceau 306 a une direction d'élongation privilégiée (pour sa forme et/ou sa répartition d'intensité lumineuse) dans un plan perpendiculaire à sa direction de propagation (i.e. par exemple il a une forme ovale dans ce plan perpendiculaire à sa direction de propagation)
- des moyens de focalisation 302, 305, agencés pour modifier la focalisation du faisceau 306

Les moyens de transformation 303 (et même les moyens de mise en forme 302, 303, 305) font partie des moyens de guidage 203.1 et sont situés le long du chemin optique de guidage 307-310 entre les moyens d'injection 203.2 et la chambre d'immersion 205.

Les moyens de transformation 303 (et même les moyens de mise en forme 302, 303, 305) sont situés entre :
- un premier plan 316 (typiquement horizontal) perpendiculaire à l'axe optique 113 de l'objectif 202 et passant par l'ouverture 314 de la chambre d'immersion 205 et
- un deuxième plan 317 (typiquement horizontal) perpendiculaire à l'axe optique 113 de l'objectif 202 et situé au-delà de l'extrémité distale 312 de l'objectif 202 par rapport au premier plan 316 (c'est-à-dire que le premier plan 316, l'extrémité distale 312 et le deuxième plan 317 sont disposés successivement dans cet ordre le long de l'axe 113), ce deuxième plan passant de préférence par l'extrémité proximale 313 de l'objectif.

Les moyens de transformation 303 sont situés sur une partie 309 du chemin optique 307-310 le long de laquelle le faisceau de lumière 306 se déplace parallèlement (ou sensiblement parallèlement à plus ou moins dix degrés) à l'axe optique 113 de l'objectif 202.

Le chemin optique de guidage 307-310 comprend au moins :
- une première partie 307 de chemin optique (typiquement verticale) agencée pour que le faisceau de lumière 306 se propage selon une première direction de propagation 319 (cette première partie étant située à partir des moyens d'injection 203.2 et jusqu'à un premier élément de réflexion optique 301a) , puis
- une partie intermédiaire 308 (typiquement horizontale) située à partir du premier élément de réflexion optique 301a jusqu'à un deuxième élément de réflexion optique 301b,
- une deuxième partie 309 de chemin optique (typiquement verticale) agencée pour que le faisceau de lumière 306 se propage selon une deuxième direction de propagation 320 opposée à la première direction 319 (cette deuxième partie étant située à partir du deuxième élément de réflexion optique 301b et jusqu'à un troisième élément de réflexion optique 301c), puis
- une dernière partie 310 (typiquement horizontale) située à partir du troisième élément de réflexion optique 301c jusqu'à la chambre d'immersion 205,
la première direction 319 étant parallèle (ou sensiblement parallèle à plus ou moins dix degrés) à l'axe optique 113 de l'objectif 202.

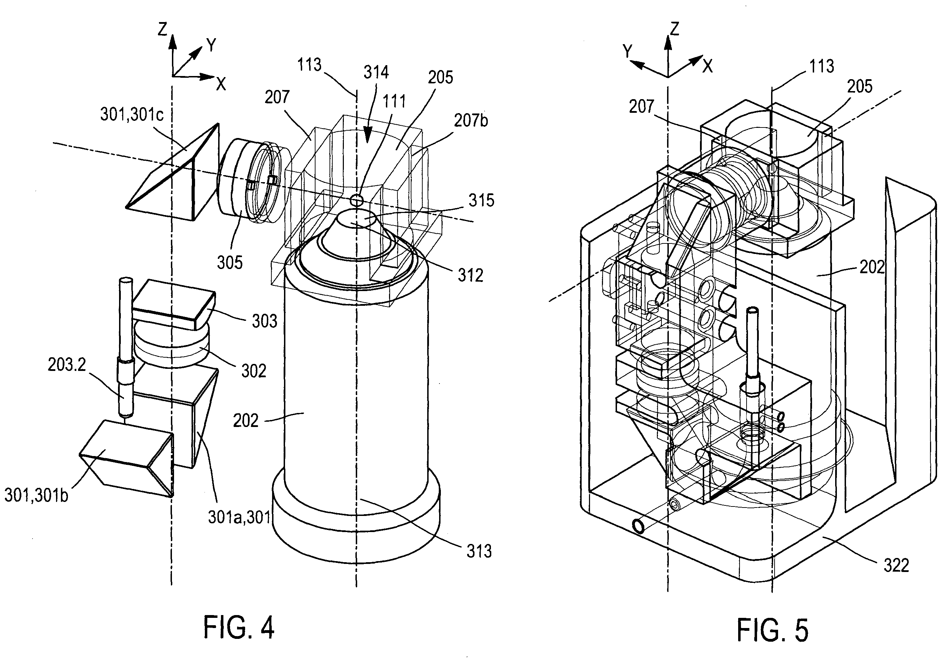

Les moyens de transformation 303 comprennent typiquement :
- une lentille cylindrique (cas illustré sur les figures 4 à 6) agencée pour mettre en forme le faisceau de lumière 306 provenant des moyens d'injection 203.2 de manière à lui donner (dans un plan perpendiculaire à sa direction de propagation) continûment dans le temps une forme allongée selon une dimension spatiale 311 dans le plan 208 ou 321, et/ou
- un miroir oscillant (cas non illustré, mais typiquement ce miroir peut être situé en tant que réflecteur référencé 301c sur la figure 6, situé à la fin de la partie 309, en combinaison ou non avec la lentille cylindrique 303) agencé pour mettre en forme le faisceau de lumière 306 provenant des moyens d'injection 203.2 de manière à lui donner (dans un plan perpendiculaire à sa direction de propagation) en moyenne dans le temps (fréquence typique supérieure à 100 Hz) une forme allongée selon une dimension spatiale 311 dans le plan 208 ou 321.

Les moyens de transformation 303 (et même de mise en forme 302, 303, 305) sont situés en dehors de l'objectif 202.

Les moyens d'injection 203.2 sont agencés pour injecter le faisceau de lumière 306 dans le dispositif 200 de sorte que lors de son injection le faisceau de lumière 306 se déplace parallèlement (ou sensiblement parallèlement à plus ou moins dix degrés) à l'axe optique 113 de l'objectif 202.

Les moyens de guidage 203.1 sont agencés pour que l'intégralité du chemin optique de guidage 307-310 entre les moyens d'injection 203.2 et la chambre d'immersion 205 soit situé entre le premier plan 316 et le deuxième plan 317.

Le fond 315 de la chambre d'immersion 205 comprend l'extrémité distale 312 de l'objectif 202 de sorte qu'il n'existe pas d'intermédiaire entre l'intérieur de la chambre d'immersion 205 et l'extrémité distale 312 de l'objectif.

Les moyens de guidage 203.1 sont agencés pour que le faisceau de lumière 306 entre dans la chambre d'immersion 205 par une face (ou fenêtre) 207 verticale de la chambre d'immersion 205 différente du fond 315 de la chambre d'immersion 205. Cette fenêtre 207 est transparente (i.e. elle laisse passer de préférence au moins 80% de l'intensité lumineuse) à au moins une longueur d'onde du faisceau 306 pour permettre à la feuille de lumière de pénétrer dans la chambre 205.

Les moyens de guidage 203.1 sont agencés pour que la direction de propagation 318 du faisceau de lumière 306 lors de son entrée dans la chambre d'immersion 205 soit perpendiculaire (ou sensiblement perpendiculaire à plus ou moins dix degrés) à l'axe optique 113 de l'objectif 202.

Les moyens d'injection 203.2, l'objectif 202, la chambre d'immersion 205, les moyens de guidage 203.1 et les moyens de transformation 303 (et même les moyens de mise en forme 302, 303, 305) sont solidaires (de préférence au sein d'un même boîtier ou d'un même bâti 322) et agencés pour qu'un déplacement de l'objectif 202 :
- ne modifie ni un angle d'incidence ni une position ni une taille du faisceau de lumière 306 sur les moyens de transformation 303 (et même sur les moyens de mise en forme 302, 303, 305)
- ne modifie pas les positions relatives du plan d'observation 208 de l'objectif 202 et du plan de feuille 321 (ou de la feuille de lumière 204).

Le plan d'observation 208 de l'objectif 202 se situe dans le plan de feuille 321 dans la chambre d'immersion 205.

Le deuxième plan 317 coupe le dispositif 200 sur un moyen de fixation 201 agencé pour fixer le dispositif 200 en reliant opto-mécaniquement l'objectif 202 au porte objectif 107 de microscope. Le moyen de fixation 201 ne comprend pas de pas de vis, car cela rendrait la fixation par rotation du dispositif 200 difficile dans le petit volume disponible entre le porte objectif 107 et le porte échantillon 110. Le moyen de fixation 201 comprend plutôt des moyens de clipsage ou bien encore un système de queue d'aronde.

Le microscope 1000 est équipé du dispositif 200 ;

Le microscope 1000 est un microscope inversé comprenant le porte objectif 107.

L'objectif 202 du dispositif 200 est monté (de préférence par l'intermédiaire du bâti 322) sur le porte objectif 107 du microscope inversé 1000, de sorte que l'objectif 202 et le porte objectif 107 partagent le même axe optique.

L'échantillon 111 est monté sur une tige faisant partie du porte échantillon 110 et dont une extrémité qui porte l'échantillon 111 est plongée dans la chambre 205 (l'échantillon peut aussi être attaché à une lamelle de microscopie inclinée par rapport au plan d'observation 208 de l'objectif 202).

Le positionnement de l'échantillon 111 par rapport à l'objectif 202 est assuré par la platine 109 qui se déplace horizontalement selon les deux directions perpendiculaires X et Y. Le déplacement vertical en Z se fait en déplaçant le porte objectif 107 verticalement. Un deuxième déplacement en Z est possible car la platine est équipée d'une motorisation en Z. Cette motorisation en Z est en général un moteur piézo-électrique utilisé pour réaliser un sectionnement rapide sur un débattement restreint.

Le porte-échantillon 110 peut comprendre des moyens de rotation agencés pour faire tourner l'échantillon :
- autour de l'axe 113 de l'objectif, et/ou
- autour d'un axe contenu dans le plan d'observation 208 de l'objectif 202.

La chambre 205 est équipée d'au moins deux tuyaux (non illustrés) pour faire renouveler le milieu d'immersion 206.

La figure 2 représente le microscope inversé 1000 et ses éléments associés équipé avec le dispositif selon l'invention 200 permettant d'ajouter au microscope la possibilité de faire du SPIM. Le dispositif opto-mécanique 200 est attaché au porte-objectif 107 du microscope grâce à la pièce de couplage 201, de manière à ce que l'axe 113 de l'objectif coïncide avec l'axe du chemin de détection du microscope 1000. L'axe de détection 113 du dispositif 200 coïncide avec l'axe de détection du microscope. De cette façon, le dispositif 200 peut être utilisé pour faire du SPIM, de l'épi-fluorescence, de la microscopie confocale et/ou en transmission. Le chemin de détection du microscope 1000 comprend typiquement au moins un détecteur matriciel, de préférence fixé à un port d'imagerie du microscope 1000. Le champ d'observation de l'objectif 202 peut être observé en SPIM et une autre technique d'imagerie du microscope 1000 avec le même détecteur.

La figure 3 représente le cas dans lequel le dispositif 200 est attaché au porte-objectif 107 du microscope inversé 1000 grâce à la pièce de couplage 201. Cette réalisation contient comme objectif 202 un objectif à immersion corrigé à l'infini qui est centré sur l'axe de détection 113 et sur lequel la chambre à immersion 205 est fixée de manière étanche. La chambre à immersion 205 possède son ouverture 314 sur le dessus et elle est remplie avec un milieu d'immersion bio-compatible 206. La chambre 205 possède également la fenêtre transparente à lumière 207 sur un de ses cotés.

Un sous ensemble opto-mécanique 203 est fixé au bâti 322 du dispositif 200, et contient :
- les moyens de guidage 203.1, et
- les moyens d'injection 203.2
- des éléments mécaniques pour maintenir en place les différents éléments optiques 203.1 et 203.2, et éventuellement régler leur position lors du montage usine.

Les moyens d'injection 203.2 comprennent ou consistent uniquement en :
- une source lumineuse (par exemple une diode laser ou Diode Electro Luminescente ou « DEL »), ou
- la sortie d'une fibre optique (comme illustré sur les figures 4, 5 et 6) ou un connecteur agencé pour connecter une fibre optique,
dont le faisceau 306 est formaté pour le système optique 203.1 pour former une feuille de lumière 204.

Le sous ensemble 203 opto-mécanique (comprenant les moyens de guidage 203.1 et les moyens d'injection 203.2) est positionné de manière à ce que la feuille de lumière 204 entre dans la chambre à immersion 205 au travers de la fenêtre 207 et à ce qu'elle se superpose au plan d'observation 208 de l'objectif 202 qui est perpendiculaire à l'axe de détection 113.
La figure 4 est une vue en perspective de différentes éléments optiques du dispositif 200 selon l'invention du microscope 1000 de la figure 2.
La figure 5 est une vue en perspective de différentes éléments optiques et de pièces mécaniques du dispositif 200 selon l'invention du microscope 1000 de la figure 2. Ces pièces mécaniques pour le montage des différents éléments optiques permettent un positionnement précis de ces différents éléments optiques, notamment lors de la fabrication en usine du dispositif 200 selon l'invention.

Toutes les réflexions par les éléments 301a, 301b et 301c peuvent être, selon la variante considérée :
- soit dans différents plans, comme illustré sur les figures 4 et 5,
- soit dans un même plan, comme illustré sur la figure 6.

La figure 6 représente un schéma en accord avec FIGURE 3 dans lequel les moyens de guidage 203.1 ont été détaillés.

Les moyens d'injection 203.2 sont constitués par la sortie d'une fibre monomode (pour l'intervalle de longueur d'onde de 400 à 650nm) dans laquelle plusieurs lasers ayant des longueurs d'onde d'émission différentes ont été injectés (intervalle de longueur d'onde de 400 à 650nm du faisceau 306). La sortie de cette fibre est située au foyer d'une lentille achromatique 302 ayant une distance focale de 40mm (AC40-49326 / Edmund Optics) de manière à créer un faisceau de lumière 306 collimaté.

La lentille cylindrique 303 a une distance focale de 20mm (LJ1960L1 / Thorlabs) et focalise le faisceau 306 selon une ligne sur un axe 304 constitué par l'intersection :
- d'un plan (horizontal) perpendiculaire à l'axe de l'objectif 113, et
- un plan (vertical) parallèle à la direction 320 de propagation du faisceau 306 au niveau de cette ligne.

Cette ligne est approximativement située dans le plan focal arrière d'une lentille achromatique 305 ayant une distance focale de 20mm (AC-asph20-49659, Edmund Optics).

Ainsi, les moyens de transformation 303 (lentille cylindrique) focalisent le faisceau 306 le long du chemin 307-310 avant la chambre 205.

Les moyens de transformation 303 (lentille cylindrique) focalisent le faisceau 306 le long du chemin 307-310 avant une lentille convergente 305 située avant la chambre 205 (et même avant le réflecteur 301c).

Après avoir traversé la fenêtre en verre 207 d'épaisseur 3mm, le faisceau 306 est ainsi focalisé, dans le milieu d'immersion 206, suivant une ligne horizontale située dans le plan d'observation 208 sur ou à proximité de l'axe optique 113. Le chemin optique 307 à 310 est replié grâce aux prismes à angle droit 301 (MRA12-E02, Thorlabs) respectivement 301a, 301b et 301c par ordre de passage du faisceau 306 sur ces prismes. L'objectif 202 intégré dans le dispositif 200 est un objectif 40x (Nikon, CFI APO 40x W NIR, NA 0.8) d'ouverture numérique égale à 0,8.

L'ouverture maximale d'illumination ou d'excitation est quant à elle de 0,24 dans cette configuration.

On remarque que le dispositif 202 :
- est très compact et entièrement contenu entre les deux plans 316 et 317, et
- permet des déplacements simples de l'échantillon 111 dans le plan d'observation 208 via le porte échantillon 110, et
- a la taille de la chambre 205 comme seule limite de déplacement ou de taille de l'échantillon 111, et
- donne la possibilité d'une forte ouverture numérique avec un objectif à immersion 202,
- permet d'éviter de modifier l'alignement de la feuille de lumière 204 avec le plan d'observation 208 de l'objectif 202 lors de son utilisation.

La figure 7 représente un deuxième mode de réalisation de dispositif 200 selon l'invention dans un deuxième mode de réalisation de microscope selon l'invention, semblable à celui décrit en référence à la figure 6 et dans laquelle le bâti 322 du dispositif 200 contient un deuxième sous ensemble 203b (identique au premier sous ensemble 203 mais disposé de manière symétrique au premier ensemble 203 par rapport à l'objectif 202) qui forme une deuxième feuille de lumière 204b. Les deux feuilles de lumière 204 et 204b formées grâce aux deux sous-ensembles 203 et 203b se propagent dans des directions opposées et se superposent dans le plan d'observation 208 de l'objectif 202. La chambre d'immersion 205 possède, dans ce cas, au moins deux fenêtres latérales 207 et 207b sur des faces opposées pour le passage des deux feuilles de lumière 204 et 204b.

La figure 8 représente une troisième réalisation de dispositif 200 selon l'invention dans un troisième mode de réalisation de microscope selon l'invention, semblable à celui décrit en référence à la figure 6 ou à la figure 7 et dans laquelle un sous ensemble opto-mécanique 209 et un détecteur 210 (typiquement une caméra 210) sont attachés au bâti 322 du dispositif 200 pour imager latéralement l'échantillon 111 (et éventuellement aussi son voisinage). Dans ce cas, la chambre d'immersion 205 possède une fenêtre latérale 211 qui n'est pas nécessairement en face de la fenêtre 207. La feuille de lumière 204 ne pénètre pas dans la chambre 205 par la fenêtre 211. Le sous ensemble opto-mécanique 209 et le détecteur 210 sont agencés pour détecter un signal optique en provenance de l'échantillon 111 ou de la chambre 205 à travers cette fenêtre 211.

Le système opto-mécanique 209 est de préférence agencé pour faire une image de l'échantillon 211 et de son voisinage sur le détecteur 210 de manière à observer la position relative de l'échantillon 111 par rapport au porte échantillon 110 et à l'objectif à immersion 202.

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Dispositif (200) comprenant :
- un bâti (322)
- des moyens d'injection (203.2), agencés pour injecter un faisceau de lumière (306) dans le dispositif (200),
- une chambre d'immersion (205),
- des moyens de guidage (203.1) agencés pour guider le faisceau de lumière (306) à partir des moyens d'injection (203.2) et jusque dans la chambre d'immersion (205) le long d'un chemin optique de guidage (307-310), et
- des moyens de mise en forme (302, 303, 305), agencés pour mettre en forme le faisceau de lumière (306) provenant des moyens d'injection (203.2) de manière à lui donner une forme allongée selon une dimension spatiale (311) de manière à créer une feuille de lumière (204) dans un plan de feuille (321) situé dans la chambre d'immersion(205),
- un objectif (202), dont un plan d'observation (208) est situé dans la chambre d'immersion (205) et est perpendiculaire à un axe optique (113) de l'objectif (202), ledit objectif (202) comprenant une extrémité distale (312) orientée vers la chambre d'immersion et une extrémité proximale (313),
la chambre d'immersion (205) comprenante :
- une ouverture (314) qui est un trou agencé pour permettre un passage d'un échantillon et
- un fond (315),
l'extrémité distale (312) de l'objectif (202) étant située du côté du fond (315) de la chambre d'immersion (205) de sorte que l'ouverture (314) de la chambre d'immersion (205), le plan de feuille (321) et l'extrémité distale (312) de l'objectif (202) soient alignés dans cet ordre
**caractérisé en ce que** les moyens de mise en forme (302, 303, 305):
- font partie des moyens de guidage (203.1) et sont situés le long du chemin optique de guidage (307-310) entre les moyens d'injection (203.2) et la chambre d'immersion (205),
- sont situés entre un premier plan (316) perpendiculaire à l'axe optique (113) de l'objectif (202) et passant par l'ouverture (314) de la chambre d'immersion (205) et un deuxième plan (317) :
• -perpendicutaire à l'axe optique (113) de l'objectif (202) et
• situé au-delà de l'extrémité distale (312) de l'objectif (202) par rapport au premier plan (316) et
• qui coupe le dispositif (200) sur un moyen de fixation (201) agencé pour fixer le dispositif (200) en reliant optiquement l'obiectif à un porte objectif (107) de microscope
les moyens d'injection (203.2), l'obiectif (202), la chambre d'immersion (205), les moyens de guidage (203.1) et les moyens de mise en forme (302, 303, 305) étant solidaires et placés au sein du bâti.

2. Dispositif selon la revendication 1, **caractérisé en ce que** les moyens de mise en forme (302, 303, 305) comprennent des moyens de transformation (303), agencés pour transformer le faisceau de lumière (306) de sorte :
- qu'avant transformation par les moyens de transformation (303), le faisceau de lumière (306) n'a pas de direction d'élongation privilégiée dans un plan perpendiculaire à sa direction de propagation, et
- qu'après transformation par les moyens de transformation (303), le faisceau de lumière (306) a une direction d'élongation privilégiée dans un plan perpendiculaire à sa direction de propagation
le moyens de transformation (303) étant situés sur une partie (308) du chemin optique (307-310) le long de laquelle le faisceau de lumière (306) se déplace parallèlement à l'axe optique (113) de l'objectif (202).

3. Dispositif selon la revendication 1 ou 2, **caractérisé en ce que** le chemin optique de guidage (307-310) comprend au moins :
- une première partie (307) de chemin optique agencée pour que le faisceau de lumière (306) se propage selon une première direction de propagation (319), puis
- une deuxième partie (309) de chemin optique agencée pour que le faisceau de lumière (306) se propage selon une deuxième direction de propagation (320) opposée à la première direction (319),
la première direction (319) étant parallèle à l'axe optique (113) de l'objectif (202).

4. Dispositif selon l'une quelconque des revendications précédentes, **caractérisé en ce que** les moyens de mise en forme (302, 303, 305) comprennent une lentille cylindrique et/ou un miroir oscillant.

5. Dispositif selon l'une quelconque des revendications précédentes, **caractérisé en ce que** les moyens de mise en forme (302, 303, 305) sont situés en dehors de l'objectif (202).

6. Dispositif selon l'une quelconque des revendications précédentes, **caractérisé en ce que** le chemin optique de guidage (307-310) ne passe pas par l'objectif (202).

7. Dispositif selon l'une quelconque des revendications précédentes, **caractérisé en ce que** les moyens d'injection (203.2) sont agencés pour injecter le faisceau de lumière (306) dans le dispositif (200) de sorte que lors de son injection le faisceau de lumière (306) se déplace parallèlement à l'axe optique (113) de l'objectif (202).

8. Dispositif selon l'une quelconque des revendications précédentes, **caractérisé en ce que** les moyens de guidage (203.1) sont agencés pour que l'intégralité du chemin optique de guidage (307-310) entre les moyens d'injection (203.2) et la chambre d'immersion (205) soit situé entre le premier plan (316) et le deuxième plan (317).

9. Dispositif selon l'une quelconque des revendications précédentes, **caractérisé en ce que** le fond (315) de la chambre d'immersion (205) comprend l'extrémité distale (312) de l'objectif (202) de sorte qu'il n'existe pas d'intermédiaire entre l'intérieur de la chambre d'immersion (205) et l'extrémité distale (312) de l'objectif.

10. Dispositif selon l'une quelconque des revendications précédentes, **caractérisé en ce que** les moyens de guidage (203.1) sont agencés pour que le faisceau de lumière (306) entre dans la chambre d'immersion (205) par une face (207) de la chambre d'immersion (205) différente du fond (315) de la chambre d'immersion (205).

11. Dispositif selon l'une quelconque des revendications précédentes, **caractérisé en ce que** les moyens de guidage (203.1) sont agencés pour que la direction de propagation (318) du faisceau de lumière (306) lors de son entrée dans la chambre d'immersion (205) soit perpendiculaire à l'axe optique (113) de l'objectif (202).

12. Dispositif selon l'une quelconque des revendications précédentes, **caractérisé en ce que** les moyens d'injection (203.2), l'objectif (202), la chambre d'immersion (205), les moyens de guidage (203.1) et les moyens de mise en forme (302, 303, 305) sont solidaires et agencés pour qu'un déplacement de l'objectif (202) :
- ne modifie ni un angle d'incidence ni une position ni une taille du faisceau de lumière (306) sur les moyens de mise en forme (302, 303, 305),
- ne modifie pas les positions relatives du plan d'observation (208) de l'objectif (202) et du plan de feuille (321).

13. Dispositif selon l'une quelconque des revendications précédentes, **caractérisé en ce que** le plan d'observation (208) de l'objectif (202) se situe dans le plan de feuille (321) dans la chambre d'immersion (205).

14. Microscope (1000) équipé d'un dispositif (200) selon l'une quelconque des revendications précédentes, **caractérisé en ce que** le microscope (1000) est un microscope inversé comprenant un porte objectif (107) et **en ce que** l'objectif (202) du dispositif (200) selon l'une quelconque des revendications précédentes est monté sur le porte objectif (107) du microscope inversé.

## Patentansprüche

1. Vorrichtung (200) aufweisend:
- ein Rahmen (322),
- Einstrahlungsmittel (203.2), die dazu eingerichtet sind, einen Lichtstrahl (306) in die Vorrichtung (200) einzustrahlen,
- eine Immersionskammer (205),
- Führungsmittel (203.1), die dazu eingerichtet sind, den Lichtstrahl (306) von den Einstrahlungsmitteln (203.2) zu der Immersionskammer (205) entlang eines optischen Führungspfades (307-310) zu führen, und
- Formungsmittel (302, 303, 305), die dazu eingerichtet sind, den Lichtstrahl (306) von den Einstrahlungsmitteln (203.2) in eine längliche Form entlang einer räumlichen Erstreckung (311) zu formen, um ein Lichtblatt (204) in einer Blattebene (321) in der Immersionskammer (205) zu erzeugen,
- ein Objektiv (202), dessen Beobachtungsebene (208) sich in der Immersionskammer (205) befindet und sich orthogonal zu einer optischen Achse (113) des Objektivs (202) erstreckt, wobei das Objektiv (202) ein der Immersionskammer zugewandtes distales Ende (312) und ein proximales Ende (313) aufweist,
wobei die Immersionskammer (205) aufweist:
- eine Öffnung (314), bei der es sich um ein Loch handelt, das dazu eingerichtet ist, eine Probe durchzulassen, und
- einen Boden (315),
wobei das distale Ende (312) des Objektivs (202) auf der Seite des Bodens (315) der Immersionskammer (205) angeordnet, so dass die Öffnung (314) der Immersionskammer (205), die Blattebene (321) und das distale Ende (312) des Objektivs (202) in dieser Reihenfolge zueinander ausgerichtet sind, **dadurch gekennzeichnet, dass** die Formungsmittel (302, 303, 305):
- einen Teil der Führungsmittel (203.1) bilden und entlang des optischen Führungspfades (307-310) zwischen den Einstrahlungsmitteln (203.2) und der Immersionskammer (205) angeordnet sind,
- zwischen einer ersten Ebene (316), die sich orthogonal zur optischen Achse (113) des Objektivs (202) und durch die Öffnung (314) der Immersionskammer (205) erstreckt, und einer zweiten Ebene (317) liegen, die:
• sich orthogonal zur optischen Achse (113) des Objektivs (202) erstreckt und
• bezüglich der ersten Ebene (316) jenseits des distalen Endes (312) des Objektivs (202) angeordnet ist und
• die Vorrichtung (200) an einem Haltemittel (201) schneidet, das dazu eingerichtet ist, die Vorrichtung (200) unter optischer Verbindung des Objektivs mit einem Mikroskopobjektivhalter (107) zu halten,
wobei die Einstrahlungsmittel (203.2), das Objektiv (202), die Immersionskammer (205), die Führungsmittel (203.1) und die Formungsmittel (302, 303, 305) in den Rahmen integriert und darin angeordnet sind.

2. Vorrichtung nach Anspruch 1, **dadurch gekennzeichnet, dass** die Formungsmittel (302, 303, 305) Transformationsmittel (303) aufweisen, die dazu eingerichtet sind, den Lichtstrahl (306) so zu transformieren:
- dass der Lichtstrahl (306) vor der Transformation durch das Transformationsmittel (303) keine bevorzugte Erstreckungsrichtung in einer Ebene orthogonal zu seiner Ausbreitungsrichtung besitzt, und
- dass der Lichtstrahl (306) nach der Transformation durch das Transformationsmittel (303) eine bevorzugte Erstreckungsrichtung in einer Ebene orthogonal zu seiner Ausbreitungsrichtung besitzt,
wobei das Transformationsmittel (303) in einem Abschnitt (308) des optischen Pfades (307-310) angeordnet ist, entlang dessen der Lichtstrahl (306) sich parallel zu der optischen Achse (113) des Objektivs (202) ausbreitet.

3. Vorrichtung nach Anspruch 1 oder 2, **dadurch gekennzeichnet, dass** der optische Führungspfad (307-310) mindestens aufweist:
- einen ersten Abschnitt (307) des optischen Pfades, der dazu eingerichtet ist, dass sich der Lichtstrahl (306) entlang einer ersten Ausbreitungsrichtung (319) ausbreitet, und anschließend
- einen zweiten Abschnitt (309) des optischen Pfades, der dazu eingerichtet ist, dass sich der Lichtstrahl (306) entlang einer zweiten Ausbreitungsrichtung (320) entgegengesetzt zur ersten Richtung (319) ausbreitet,
wobei die erste Richtung (319) parallel zur optischen Achse (113) des Objektivs (202) verläuft.

4. Vorrichtung nach einem der vorhergehenden Ansprüche, **dadurch gekennzeichnet, dass** die Formungsmittel (302, 303, 305) eine Zylinderlinse und/oder einen Schwingspiegel aufweisen.

5. Vorrichtung nach einem der vorhergehenden Ansprüche, **dadurch gekennzeichnet, dass** die Formungsmittel (302, 303, 305) außerhalb des Objektivs (202) angeordnet sind.

6. Vorrichtung nach einem der vorhergehenden Ansprüche, **dadurch gekennzeichnet, dass** der optische Führungspfad (307-310) nicht durch das Objektiv (202) verläuft.

7. Vorrichtung nach einem der vorhergehenden Ansprüche, **dadurch gekennzeichnet, dass** die Einstrahlungsmittel (203.2) dazu eingerichtet sind, den Lichtstrahl (306) so in die Vorrichtung (200) einzustrahlen, dass sich der Lichtstrahl (306) bei der Einstrahlung parallel zur optischen Achse (113) des Objektivs (202) ausbreitet.

8. Vorrichtung nach einem der vorhergehenden Ansprüche, **dadurch gekennzeichnet, dass** die Führungsmittel (203.1) so eingerichtet sind, dass der gesamte optische Führungspfad (307-310) zwischen den Einstrahlungsmitteln (203.2) und der Immersionskammer (205) zwischen der ersten Ebene (316) und der zweiten Ebene (317) liegt.

9. Vorrichtung nach einem der vorhergehenden Ansprüche, **dadurch gekennzeichnet, dass** der Boden (315) der Immersionskammer (205) das distale Ende (312) des Objektivs (202) beinhaltet, so dass kein Zwischenraum zwischen dem Inneren der Immersionskammer (205) und dem distalen Ende (312) des Objektivs existiert.

10. Vorrichtung nach einem der vorhergehenden Ansprüche, **dadurch gekennzeichnet, dass** die Führungsmittel (203.1) so eingerichtet sind, dass der Lichtstrahl (306) in die Immersionskammer (205) durch eine Fläche (207) der Immersionskammer (205) eintritt, die nicht der Boden (315) der Immersionskammer (205) ist.

11. Vorrichtung nach einem der vorhergehenden Ansprüche, **dadurch gekennzeichnet, dass** die Führungsmittel (203.1) so eingerichtet sind, dass die Ausbreitungsrichtung (318) des Lichtstrahls (306) bei seinem Eintritt in die Immersionskammer (205) orthogonal zur optischen Achse (113) des Objektivs (202) verläuft.

12. Vorrichtung nach einem der vorhergehenden Ansprüche, **dadurch gekennzeichnet, dass** die Einstrahlungsmittel (203.2), das Objektiv (202), die Immersionskammer (205), die Führungsmittel (203.1) und die Formungsmittel (302, 303, 305) zusammenhängend und so eingerichtet sind, dass eine Verlagerung des Objektivs (202):
- weder einen Einfallswinkel noch eine Position oder eine Breite des Lichtstrahls (306) auf den Formungsmitteln (302, 303, 305) verändert,
- die relativen Positionen der Beobachtungsebene (208) des Objektivs (202) und der Blattebene (321) nicht verändert.

13. Vorrichtung nach einem der vorhergehenden Ansprüche, **dadurch gekennzeichnet, dass** die Beobachtungsebene (208) des Objektivs (202) in der Blattebene (321) in der Immersionskammer (205) liegt.

14. Mikroskop (1000), ausgestattet mit einer Vorrichtung (200) nach einem der vorhergehenden Ansprüche, **dadurch gekennzeichnet, dass** das Mikroskop (1000) ein umgekehrtes Mikroskop ist, das einen Objektivhalter (107) aufweist, und dass das Objektiv (202) der Vorrichtung (200) nach einem der vorhergehenden Ansprüche an dem Objektivhalter (107) des umgekehrten Mikroskops angebracht ist.

## Claims

1. Device (200) comprising:
- a frame (322)
- injection means (203.2), arranged for injecting a light beam (306) into the device (200),
- an immersion chamber (205),
- guiding means (203.1) arranged for guiding the light beam (306) from the injection means (203.2) and into the immersion chamber (205) along an optical guide path (307-310), and
- shaping means (302, 303, 305), arranged for shaping the light beam (306) originating from the injection means (203.2) so as to give it a shape that is elongated in one spatial dimension (311) so as to create a light sheet (204) in a sheet plane (321) situated in the immersion chamber (205),
- an objective (202), an observation plane (208) of which is situated in the immersion chamber (205) and is perpendicular to an optical axis (113) of the objective (202), said objective (202) comprising a distal end (312) orientated towards the immersion chamber and a proximal end (313),
the immersion chamber (205) comprising:
- an aperture (314) which is hole arranged in order to allow passage of a sample, and
- a bottom (315),
the distal end (312) of the objective (202) being situated on the side of the bottom (315) of the immersion chamber (205) so that the aperture (314) of the immersion chamber (205), the sheet plane (321) and the distal end (312) of the objective (202) are aligned in this order
**characterized in that** the shaping means (302, 303, 305):
- form part of the guiding means (203.1) and are situated along the optical guide path (307-310) between the injection means (203.2) and the immersion chamber (205),
- are situated between a first plane (316) perpendicular to the optical axis (113) of the objective (202) and passing through the aperture (314) of the immersion chamber (205) and a second plane (317), this second plane (317):
• being perpendicular to the optical axis (113) of the objective (202) and
• being situated beyond the distal end (312) of the objective (202) with respect to the first plane (316) and
• intersecting the device (200) at a fastening means (201) arranged for fastening the device (200) by optically connecting the objective to an objective holder (107) of the microscope
the injection means (203.2), the objective (202), the immersion chamber (205), the guiding means (203.1) and the shaping means (302, 303, 305) being secured together within the frame (322).

2. Device according to claim 1, **characterized in that** the shaping means (302, 303, 305) comprise transformation means (303), arranged for transforming the light beam (306) so that:
- before transformation by the transformation means (303), the light beam (306) does not have a favoured direction of elongation in a plane perpendicular to its direction of propagation, and
- after transformation by transformation means (303), the light beam (306) has a favoured direction of elongation in a plane perpendicular to its direction of propagation
the transformation means (303) being situated on a portion (308) of the optical path (307-310) along which the light beam (306) moves parallel to the optical axis (113) of the objective (202).

3. Device according to claim 1 or 2, **characterized in that** the optical guide path (307-310) comprises at least:
- a first portion (307) of optical path arranged so that the light beam (306) propagates in a first direction of propagation (319), then
- a second portion (309) of optical path arranged so that the light beam (306) propagates in a second direction of propagation (320) opposite to the first direction (319),
the first direction (319) being parallel to the optical axis (113) of the objective (202).

4. Device according to any one of the preceding claims, **characterized in that** the shaping means (302, 303, 305) comprise a cylindrical lens and/or an oscillating mirror.

5. Device according to any one of the preceding claims, **characterized in that** the shaping means (302, 303, 305) are situated outside the objective (202).

6. Device according to any one of the preceding claims, **characterized in that** the optical guide path (307-310) does not pass through the objective (202).

7. Device according to any one of the preceding claims, **characterized in that** the injection means (203.2) are arranged for injecting the light beam (306) into the device (200) so that during its injection the light beam (306) moves parallel to the optical axis (113) of the objective (202).

8. Device according to any one of the preceding claims, **characterized in that** the guiding means (203.1) are arranged so that the entire optical guide path (307-310) between the injection means (203.2) and the immersion chamber (205) is situated between the first plane (316) and the second plane (317).

9. Device according to any one of the preceding claims, **characterized in that** the bottom (315) of the immersion chamber (205) comprises the distal end (312) of the objective (202) so that no intermediate exists between the inside of the immersion chamber (205) and the distal end (312) of the objective.

10. Device according to any one of the preceding claims, **characterized in that** the guiding means (203.1) are arranged so that the light beam (306) enters the immersion chamber (205) through a face (207) of the immersion chamber (205) different from the bottom (315) of the immersion chamber (205).

11. Device according to any one of the preceding claims, **characterized in that** the guiding means (203.1) are arranged so that the direction of propagation (318) of the light beam (306) during its entry into the immersion chamber (205) is perpendicular to the optical axis (113) of the objective (202).

12. Device according to any one of the preceding claims, **characterized in that** the injection means (203.2), the objective (202), the immersion chamber (205), the guiding means (203.1) and the shaping means (302, 303, 305) are secured together and arranged so that a movement of the objective (202):
- does not modify either an angle of incidence or a position or a size of the light beam (306) on the shaping means (302, 303, 305),
- does not modify the relative positions of the observation plane (208) of the objective (202) and of the sheet plane (321).

13. Device according to any one of the preceding claims, **characterized in that** the observation plane (208) of the objective (202) is situated in the sheet plane (321) in the immersion chamber (205).

14. Microscope (1000) equipped with a device (200) according to any one of the preceding claims, **characterized in that** the microscope (1000) is an inverted microscope comprising an objective holder (107) and **in that** the objective (202) of the device (200) according to any one of the preceding claims is mounted on the objective holder (107) of the inverted microscope.
